# FASCICULE DE BREVET EUROPEEN

(11) **EP 2 412 142 B1**
(45) Date de publication et mention de la délivrance du brevet: **12.06.2019**
(21) Numéro de dépôt: 10716580.5
(22) Date de dépôt: 25.03.2010
(51) Int. Cl.: H04L 29/08, H04L 12/18, G06F 3/14, G09G 5/39

(54) **PROCÉDÉ DE PARTAGE À DISTANCE DE BUREAU(X) INFORMATIQUE(S)**
VERFAHREN ZUR ENTFERNTEN GEMEINSAMEN BENUTZUNG VON COMPUTERBÜRO(S)
METHOD FOR THE REMOTE SHARING OF COMPUTER OFFICE(S)

(30) Priorité: 25.03.2009 FR 0951942
(43) Date de publication de la demande: 01.02.2012
(73) Titulaire: SAGEMCOM BROADBAND SAS, 92500 Rueil-Malmaison (FR)
(72) Inventeur: Morard, Jean-Pierre, F-92500 Rueil-Malmaison (FR); Bardoux, Gilles, F-92500 Rueil-Malmaison (FR)
(74) Mandataire: Camus, Olivier Jean-Claude
(86) Numéro de dépôt international: PCT/FR2010/050554
(87) Numéro de publication internationale: WO 2010/109151

(56) Documents cités:
- US-A1- 2002 087 761
- US-A1- 2005 267 779
- US-A1- 2009 070 404
- US-B1- 6 463 459
- BOYACI O ET AL: "BASS Application Sharing System" MULTIMEDIA, 2008. ISM 2008. TENTH IEEE INTERNATIONAL SYMPOSIUM ON, IEEE, PISCATAWAY, NJ, USA, 15 décembre 2008 (2008-12-15), pages 432-439, XP031535111 ISBN: 978-0-7695-3454-1
- TAE-HO LEE ET AL: "Extending VNC for effective collaboration" STRATEGIC TECHNOLOGIES, 2008. IFOST 2008. THIRD INTERNATIONAL FORUM ON, IEEE, PISCATAWAY, NJ, USA, 23 juin 2008 (2008-06-23), pages 343-346, XP031309139 ISBN: 978-1-4244-2319-4
- XIAOLIN LU: "WSFRB protocol and virtual program computing" COMPUTER SUPPORTED COOPERATIVE WORK IN DESIGN, 2004. PROCEEDINGS. THE 8TH INTERNATIONAL CONFERENCE ON XIAMEN, CHINA MAY 26-28, 2004, PISCATAWAY, NJ, USA,IEEE, vol. 1, 26 mai 2004 (2004-05-26), pages 475-480, XP010737053 ISBN: 978-0-7803-7941-1
- GROLAUX D ET AL: "Migratable user interfaces:beyond migratory interfaces" MOBILE AND UBIQUITOUS SYSTEMS: NETWORKING AND SERVICES, 2004. MOBIQUIT OUS 2004. THE FIRST ANNUAL INTERNATIONAL CONFERENCE ON BOSTON, MA, USA AUG. 22-26, 2004, PISCATAWAY, NJ, USA,IEEE LNKD- DOI:10.1109/MOBIQ.2004.1331749, 22 août 2004 (2004-08-22), pages 422-430, XP010721001 ISBN: 978-0-7695-2208-1
- HYUNJU LEE ET AL: "The u-MUSE System: An Integrated UPnP AV Home Entertainment System supporting RUI Service and Device Mobility" HYBRID INFORMATION TECHNOLOGY, 2006. ICHIT '06. INTERNATIONAL CONFERENCE ON, IEEE, PISCATAWAY, NJ, USA, 9 novembre 2006 (2006-11-09), pages 712-717, XP031260295 ISBN: 978-0-7695-2674-4

## Description

### Domaine technique de l'invention

La présente invention concerne un procédé de partage à distance de bureau(x) informatique(s), notamment via un protocole de partage graphique du type RUI.

### Arrière-plan technologique de l'invention

Un nombre croissant d'applications permettent à un utilisateur, muni d'un terminal, de mettre en oeuvre des applications informatiques hébergées par un serveur distant du terminal.

Typiquement, il est connu d'utiliser le réseau Internet pour permettre à un particulier de se connecter depuis un terminal, par exemple un ordinateur situé à son domicile, à un serveur distant, par exemple situé sur son lieu de travail afin d'accéder à des applications professionnelles telles que son courriel ou sa comptabilité.

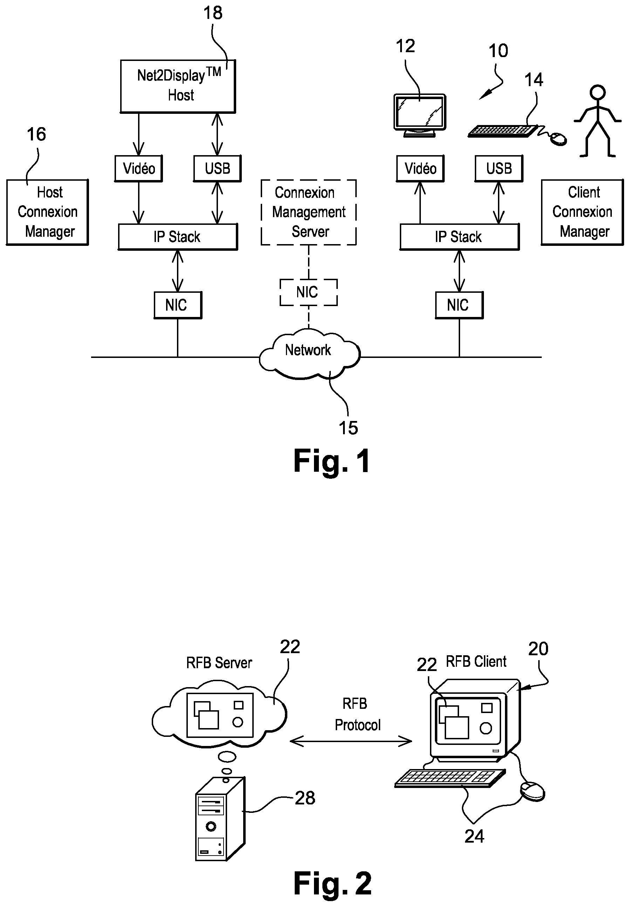

Selon une première approche, cet accès à distance via le réseau Internet est effectué à l'aide d'un terminal 10 (figure 1) comprenant un système opératif léger et minimal, voire inexistant.

De fait, un tel terminal 10 n'a pour fonction dans cette première approche que de permettre, d'une part, l'affichage sur un moniteur 12 d'images générées à partir de données reçues d'un serveur 16 hébergeant les applications requises par l'utilisateur 11 et, d'autre part, de transmettre des commandes, saisies à l'aide d'un clavier et/ou d'une souris 14 par l'utilisateur 11, vers ce serveur 16.

Pour sa part, le serveur 16 reçoit donc ces commandes, via le réseau 15 du type Internet, et utilise un système opératif 18 pour appliquer les commandes issues des outils 14 de saisie aux applications hébergées.

En résumé, la gestion des moyens applicative est entièrement effectuée au niveau du serveur hébergeur 18 déporté tandis que le terminal 10 a un rôle d'interface homme/machine distante entre l'utilisateur final 11 et le serveur 18 pour, notamment, générer les images affichées.

Cette première approche est décrite par exemple dans le document « 14.2 : Net2displaytm : a proposed VESA standard for remoting diplays and I/O devices over networks » deK.Ocheltree, S.millman, M.Macdonnell, D.Hobbs, J.Nieh et R.Baratto.

Elle présente l'inconvénient de ne pas permettre le partage commun d'un bureau hébergé au niveau du serveur distant entre plusieurs utilisateurs, ce partage commun étant tel qu'un même bureau et/ou des applications associées sont identiquement affichés pour tous les utilisateurs partageant ce bureau.

Dans un tel partage commun, chaque modification du bureau, et/ou de ses applications associées, commandées par un utilisateur sont affichées au niveau de tous les utilisateurs communs.

En outre, un tel procédé ne permet pas d'implémenter aisément un partage personnel, dénommé partage virtuel, du bureau et de ses applications, ce partage virtuel étant tel que différents bureaux personnels sont affichés au niveau de chaque utilisateur conformément à ces commandes.

Dans un tel partage virtuel, les modifications du bureau, et/ou de ses applications associées, commandées par un utilisateur ne sont affichées qu'au niveau des utilisateurs de ce bureau virtuel.

De fait, le partage de bureaux entre plusieurs utilisateurs n'a pas été prévu dans l'approche Net2Display où seule l'utilisation de plusieurs bureaux par un même client (pour une session donnée) est prévue.

Selon une seconde approche, l'accès à distance est effectué à l'aide d'un terminal comprenant un système opératif suffisamment développé pour permettre à plusieurs utilisateurs de partager un même bureau de façon solidaire.

Par exemple, une telle approche est implémentée dans le système opératif RDP 6 sous Windows™ 2008, de la société Microsoft Inc, USA implémenté au niveau du terminal. D'autres exemples de partage de bureau à distance sont connus des articles "BASS Apllication Sharing system" de O. Boyaci et al (10th IEEE international symposium on multimédia, pages 432-439, ISBN 978-0-7695-3454-1, du 15 décembre 2008), "Extending VNC for Effective Collaboration" de Tae-Ho LEE et al (IFOST 2008, pages 343-346, ISBN 978-1-4244-2319-4) et "WSFRB protocol and virtual program computing" de Xiaolin LIU (8th International conférence on computer supported coopérative work in design, pages 457-480, ISBN 978-0-7803-7941-1) ainsi que de la demande de brevet US2009/070404 A1; des systèmes permettant à plusieurs clients à la fois d'être servis par un serveur distant sont connus de la demande de brevet US2005/267779 A1 et du brevet US6463459 B1.

Toutefois, cette seconde approche est basée sur des outils dont les caractéristiques techniques - par exemple en termes de protocoles de communication, de capacités de mémoire et/ou de fréquence de travail - sont inadaptées et distinctes vis-à-vis des caractéristiques du domaine de l'accès à Internet haut débit grand public.

En effet un tel domaine se caractérise par l'utilisation de décodeurs de télévision numériques présentant des ressources limitées et des protocoles propriétaires spécialement développées pour la mise en oeuvre de ses applications limitées.

Dès lors, le partage d'un bureau via de tels décodeurs numériques requiert une adaptation coûteuse et complexe des décodeurs et de leurs applications afin qu'ils soient compatibles avec les protocoles et le langage des applications à partager.

### Description générale de l'invention

Dans ce contexte, la présente invention vise à résoudre au moins un de ces inconvénients en proposant un procédé pour partager un bureau informatique à distance à l'aide d'un protocole simple, public et facile à implémenter, notamment avec des décodeurs numériques d'accès haut débit à Internet.

Elle résulte de la constatation qu'un protocole de partage graphique, du type RUI pour « Remote User Interface », se révèle compatible pour permettre un partage de bureaux, tant commun que virtuel, via un décodeur numérique compte tenu, d'une part, de la simplicité de sa mise en oeuvre permettant de développer de nouvelles fonctions et, d'autre part, de sa nature basée sur le stockage à distance des interfaces graphiques et la transmission d'images, décrite en détail dans la description ultérieure.

C'est pourquoi, l'invention concerne un procédé de partage à distance d'un bureau informatique généré par une application exécutée dans un serveur en réponse à des commandes émises par des terminaux clients accédant à ce serveur via un réseau de télécommunication, les commandes d'un terminal client étant saisies au moyen d'une zone de saisie dénommée focus, caractérisé en ce que les terminaux clients transmettent au serveur des commandes, dédiées au partage de bureau, saisies au moyen de différents focus, conformément à un protocole de transmission d'interfaces graphiques du type RUI, pour « Remote User Interface » en anglais, de telle sorte, que le serveur effectue une correspondance, au moyen desdits focus, entre les commandes reçues et les bureaux partagés afin de transmettre en réponse aux commandes des terminaux une interface graphique représentative de ce bureau du serveur au moyen d'indications de l'état des pixels dans cette interface graphique conformément à ce protocole du type RUI.

Grâce à l'invention, un utilisateur peut aisément mettre en oeuvre un partage de bureau(x) informatique distant, au moyen d'un protocole léger et simple à mettre en oeuvre dans des décodeurs vidéo numériques existants.

De fait, un protocole du type RUI transmet des signaux visant à indiquer l'affichage devant être effectué par un pixel de telle sorte que, pour un décodeur numérique généralement associé à un écran de télévision ou d'ordinateur, la transmission de cette information à cet écran s'avère simple à mettre en oeuvre.

Par ailleurs, un protocole du type RUI permet de développer des fonctions simples pour le partage d'un écran, comme montré ultérieurement. Dès lors, les commandes nécessaires au partage d'un écran, selon un mode commun ou virtuel, sont aisément réalisables.

En résumé, l'utilisation d'une pluralité de focus pour la gestion du partage de bureau(x) permet de mettre en oeuvre ce partage de façon simple et économique.

Dans une réalisation, le serveur transmet à des terminaux clients effectuant un partage commun d'un même bureau une même interface graphique.

Selon une réalisation, les commandes transmises par chacun des terminaux clients effectuant un partage commun d'une même interface graphique sont exécutées, par leur serveur, dans leur ordre de réception, l'interface graphique générée par le serveur pour ce bureau commun suite à l'exécution d'une commande étant transmise à l'ensemble des terminaux clients effectuant le partage commun.

Dans une réalisation, le serveur transmet à des terminaux clients effectuant un partage virtuel de bureaux distincts des interfaces graphiques distinctes.

Selon une réalisation, les commandes transmises par un des terminaux clients effectuant un partage virtuel de différentes interfaces graphiques sont exécutées, par leur serveur, uniquement vis-à-vis de l'interface graphique du bureau associé à ce terminal.

Dans une réalisation, le protocole du type RUI est basé sur un protocole de type RFB pour « Remote Frame Buffer » en anglais.

Selon une réalisation, le procédé prend en compte au moins une des commandes du type RFB suivantes :
- « GetVirtualDesktopList » : pour envoyer un message d'un terminal client vers le serveur afin de demander les éventuels bureaux disponibles sur le serveur,
- « VirtualDesktopList » : pour que le serveur réponde à la requête du terminal client en transmettant la liste des bureaux disponibles,
- « VirtualDesktopAuthentication » pour qu'un terminal client puisse choisir de se connecter sur un bureau virtuel déjà existant via la fonction,
- « NotifyClientConnection » pour informer un terminal client de la demande de connexion de l'autre terminal client,
- « VirtualDesktopAuthenticationAllowance » : pour accepter ou refuser le partage d'un bureau en mode commun, cette acceptation ou ce refus étant notifié par l'envoi d'un message du serveur vers un terminal client requérant ce partage.

Dans une réalisation, le serveur associe d'une part un identifiant d'un terminal client avec un ensemble d'identifiants de focus correspondant chacun à au moins un périphérique de saisie côté client, et associe d'autre part un identifiant de terminal avec un bureau virtuel.

L'invention concerne également un serveur destiné à effectuer un partage à distance d'un bureau informatique généré par une ou plusieurs applications exécutées localement en réponse à des commandes émises par des terminaux clients accédant à ce serveur via un réseau de télécommunication, caractérisé en ce qu'il comprend :
- des moyens pour recevoir, des terminaux clients, des commandes dédiées au partage de bureau et conformes à un protocole de transmission d'interfaces graphiques du type RUI, et
- des moyens pour gérer une pluralité de focus, ou zones de saisies de commandes des terminaux clients, pouvant accéder à une même ressource présentée par une application.
- des moyens pour transmettre en réponse aux terminaux une interface graphique représentative du bureau au moyen d'indications de l'état des pixels dans cette interface graphique conformément au protocole du type RUI, Conformément à un procédé selon l'une des réalisations précédentes.

L'invention est définie par la revendication de procédé 1 et la revendication de dispositif serveur 8.

### Brève description des figures

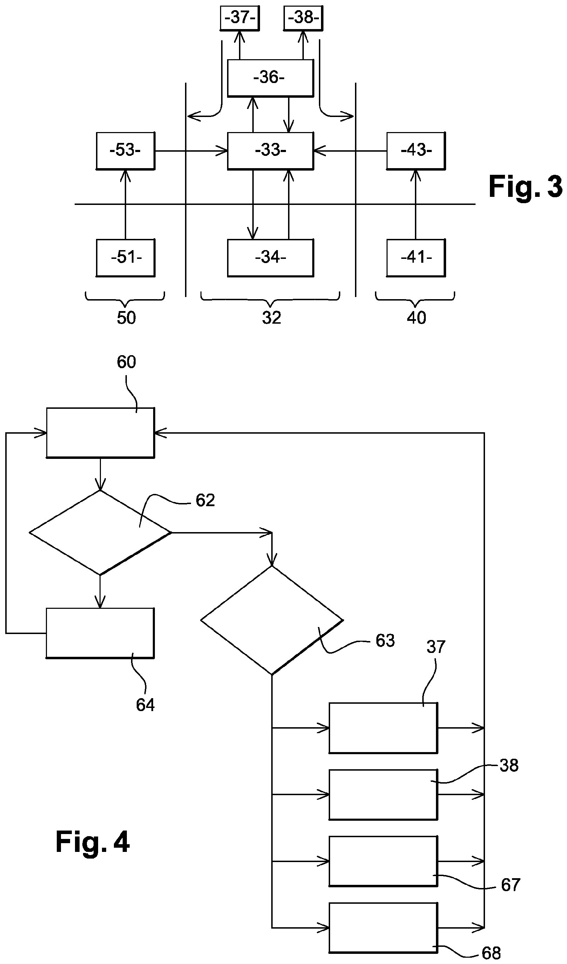

D'autres caractéristiques et avantages de l'invention ressortiront clairement de la description qui en est donnée ci-dessous, à titre indicatif et nullement limitatif, en référence aux figures ci-jointes sur lesquelles :
- A la figure 1, déjà décrite, est représenté schématiquement un système d'accès à distance d'un terminal à un serveur selon l'art antérieur,
- A la figure 2 est illustré schématiquement le fonctionnement d'un protocole du type RFB,
- A la figure 3 est représenté un diagramme fonctionnel décrivant l'accès à distance de deux terminaux clients à un serveur selon l'invention,
- A la figure 4 et représenté un organigramme des opérations effectuées par un serveur RFB implémentant l'invention.

### Description des formes de réalisation préférées de l'invention:

La description de l'invention effectuée ci-dessous met en oeuvre un protocole du type RUI tel que le protocole RFB décrit, par exemple, dans le document « The RFB Protocol », de Tristan Richardson, Real VNC Ltd, version 3.8, mise à jour le 26 février 2009 (http:// www.realvnc.com).

Selon un tel protocole, un terminal utilisateur 20, dénommé terminal RFB ou terminal client, affiche une interface graphique 22 générée par un serveur RFB 28 distant qui héberge les moyens hardwares - composants - et software - logiciels - pour déterminer les caractéristiques de cette interface graphique 22 en fonction de commandes émises par ce terminal 20 via ses outils de saisie 24.

De fait, le protocole RFB se caractérise par l'utilisation d'instructions graphiques simples telles qu'une commande pour afficher un rectangle de pixels de données à une position (x, y) donnée de l'écran.

Chaque image formée par le serveur RFB est stockée dans une mémoire tampon - dite « framebuffer » - du serveur 28, généralement codée en format RGB (« Red Green Blue » en anglais), qui constitue la manière la plus directe de coder les images, les trois plans correspondant aux trois couleurs élémentaires rouge, vert et bleu.

De par sa spécificité graphique, un protocole RUI tel que le protocole RFB ne semble pas permettre la réalisation d'applications complexes telles qu'un partage de bureau informatique à distance.

Toutefois, selon une constatation propre à l'invention, le protocole RFB permet aisément tant de partager un même bureau - partage commun - que de partager les moyens applicatif pour gérer différents bureaux - partage individuel ou virtuel- propres à plusieurs utilisateurs.

Dans le premier cas, un partage commun d'un bureau résulte directement de la nature d'un protocole du type RUI qui, générant à distance l'image de l'interface et/ou de ses applications, peut partager ses images créées in situ avec différents terminaux.

En d'autres termes, un tel protocole du type RUI permet un partage simple et aisé d'un même bureau puisque la gestion de ce dernier n'est pas directement effectuée par un terminal RFB mais centralisé au niveau du serveur RFB.

Dès lors, un serveur du type RUI doit simplement implémenter des moyens, telles qu'une pile d'instruction, pour gérer le bureau commun, et/ou ses applications, selon des instructions provenant de différents terminaux, les modifications de l'interface graphique étant partagées avec tous ces terminaux RFB.

Dans le second cas - partage virtuel - il convient de noter que le protocole du type RUI met en oeuvre un codage de données associées aux pixels de l'interface graphique qui permet de développer simplement de nouvelles fonctions.

Par exemple, le protocole RFB met en oeuvre des échanges entre le serveur RFB et ses terminaux RFB pour déterminer le format et l'encodage des données de pixels, étant entendu que le format se réfère la couleur des pixels - par exemple 24-bits ou 16-bits, tandis que l'encodage se réfère à la façon dont un rectangle de pixels est identifié sur l'écran.

Dès lors de nouvelles fonctions peuvent être générées pour associer des bureaux virtuels à des terminaux RFB distincts de telle sorte que des commandes émises par chaque terminal RFB puissent être implémentées spécifiquement vis-à-vis d'un bureau virtuel associé à ce terminal RFB.

A titre d'exemple, les fonctions suivantes ont été développées pour permettre la gestion de tels bureaux virtuels via le standard, ou norme, RFB dont les désignations usuelles sont reprises ci-dessous:
- Fonction d'envoi d'un message du terminal client vers le serveur RFB pour la demande des bureaux disponibles sur un serveur donné dénommée « GetVirtualDesktopList »

| Nombre d'octets | Type | | Description |
|---|---|---|---|
| | [Value] | | |
| 1 | U8 | 10 | *message-type* |

- Fonction d'envoi d'un message en réponse, du serveur RFB vers le client RFB, pour donner la liste des bureaux disponibles dénommée « Virtual DesktopList »

| No. of bytes | Type | Description |
|---|---|---|
| | [Value] | |
| 1 | U8 | *message-type* |
| | 10 | |
| 2 | U16 | *number_of_virtual_desktops (=N)* |
| | N | |
| N*sizeof(VIRTUAL_DESKTOP) | VIRTUAL_DESKTOP array | List of available virtual desktops on the server |

A cet effet, la structure d'un bureau virtuel, ou « VIRTUAL_DESKTOP », peut être formée de la façon suivante:

| No. of bytes | Type | [Value] | Description |
|---|---|---|---|
| 4 | U32 | | *virtual_desktop _id* |
| 4 | U32 | N | *number_of_users* |
| N*sizeof(USER) | USER array | | *Names of current users connected to this virtual desktop* |

Tandis que la structure USER est la suivante:

| No. of bytes | Type | [Value] | Description |
|---|---|---|---|
| 4 | U32 | | *user_id* |
| 32 | U8 array | | *user_name* |

- Fonction d'envoi d'un message du client RFB au serveur pour l'authentification sur un bureau virtuel déjà existant, dénommée « VirtualDesktopAuthentication »

| No. of bytes | Type | | Description |
|---|---|---|---|
| | [Value] | | |
| 1 | U8 | 11 | message-type |
| 4 | U32 | | *virtual_desktop_id* |
| 4 | U32 | | user_id (id of the client whishing to connect on the virtual desktop identified by virtual_dekstop_id) |

- Fonction d'envoi d'un message du serveur RFB vers le terminal client pour la notification à un terminal client (CLIENT1) de la demande de connexion d'un autre terminal client (CLIENT2) sur bureau virtuel utilisé par CLIENT1, dénommée « NotifyClientConnection ».

| No. of bytes | Type | | Description |
|---|---|---|---|
| | [Value] | | |
| 1 | U8 | 11 | message-type |
| sizeof(USER) | USER | | *new_user* |

- Fonction d'envoi d'un message du terminal client RFB vers le serveur pour l'acceptation ou rejet de connexion d'un autre client sur bureau virtuel donné dénommée « VirtualDesktopAuthenticationAllowance ».

| No. of bytes | Type | | Description |
|---|---|---|---|
| | [Value] | | |
| 1 | U8 | 12 | message-type |
| 4 | U32 | | *user_id (identifies the user giving the permission)* |
| 4 | U32 | | *new_user_id (identifies the user who wants to connect)* |
| 4 | U32 | | *virtual_desktop_id (identifies the queried virtual desktop)* |
| 1 | U8 | 0 => accept | *accept_flag* |
| | | 1 => reject | |

- Fonction d'envoi d'un message serveur RFB vers le client RFB pour notifier du succès ou de l'échec de la connexion à un bureau virtuel donné. « VirtualDesktopAuthenticationResult ».

| No. of bytes | Type [Value] | | Description |
|---|---|---|---|
| 1 | U8 | 12 | message-type |
| 4 | U32 | | *virtual_desktop_id* |
| 1 | U8 | 0 => accept | *accept_flag* |
| | | 1 => reject | |

- Fonction d'envoi d'un message client RFB vers le serveur RFB pour se déconnecter d'un bureau virtuel, dénommée « VirtualDesktopDisconnect ».

| No. of bytes | Type | | Description |
|---|---|---|---|
| | [Value] | | |
| 1 | U8 | 13 | message-type |
| 4 | U32 | | *virtual_desktop_id* |
| 1 | U8 | 0 => accept | *accept_flag* |
| | | 1 => reject | |

- Fonction d'envoi d'un message du client RFB vers le serveur RFB pour notifier le changement de bureau virtuel côté client dénommée « VirtualDesktopSwitch ».

| No. of bytes | Type | | Description |
|---|---|---|---|
| | [Value] | | |
| 1 | U8 | 14 | message-type |
| 4 | U8 | | *user_id* |
| 4 | U32 | | *new_virtual_desktop_id* |

Dans ce cas, le client doit être déjà connecté au bureau virtuel, identifié par « new_virtual_desktop_id », pour établir la connection.
- Fonction d'envoi d'un message du client RFB vers le serveur RFB pour les événements d'un clavier, d'une souris, ou de tout autre périphérique d'entrée, accompagné de l'identifiant du client, ainsi que d'un indicateur disant si l'événement est exclusif ou non exclusif à un bureau dénommé « VirtualDesktoplnputEvent ».

| No. of bytes | Type | | | Description |
|---|---|---|---|---|
| | [Value] | | | |
| 1 | U8 | | 14 | message-type |
| 4 | U8 | | | *user_id* |
| 4 | U32 | | | *virtual_desktop_id* |
| 4 | U32 | | | *event_type* |
| 1 | U | 0 => non exclusive | | *exclusive_flag* |
| | | 1 => exclusive | | |

Il apparaît ainsi que le protocole RFB, enrichi avec de telles fonctions, permet d'associer une pluralité de terminaux 20 à un serveur 24 RFB afin générer des bureaux virtuels spécifiques à chaque terminal 20.

Une telle mise en oeuvre est illustrée à la figure 3 qui représente deux terminaux clients 40 et 50 comprenant des pilotes respectives 41 et 51 pouvant transmettre des commandes à un serveur 32 VNC, pour Virtual Network Connection en anglais, hébergeant un bureau informatique et des applications logicielles associées à ce dernier.

Des moyens de communication 43 et 53 des terminaux RFB communiquent avec des moyens 33 du serveur 32 RFB à l'aide, par exemple, d'un protocole IP.

Typiquement, ces communications mettent en oeuvre les fonctions « GetVirtualDesktopList », pour envoyer un message des terminaux clients vers le serveur RFB afin de demander les bureaux disponibles sur le serveur 32, et « VirtualDesktopList » pour que le serveur RFB réponde aux requêtes des clients RFB en transmettant la liste des bureaux disponibles.

A partir de cette liste, un terminal 40 ou 50 peut choisir de se connecter sur un bureau virtuel déjà existant via la fonction « VirtualDesktopAuthentication ».

Toutefois, ce bureau virtuel peut déjà être utilisé par un terminal client (CLIENT1) qui est alors informé de la demande de connexion de l'autre terminal client (CLIENT2) - fonction « NotifyClientConnection ».

Ce dernier peut, via la fonction « VirtualDesktopAuthenticationAllowance », accepter ou refuser le partage de son bureau en mode commun, cette acceptation ou ce refus étant notifié par l'envoi d'un message du serveur RFB vers le client RFB - fonction « VirtualDesktopAuthenticationResult ».

Il convient de noter que ces opérations sont mises en oeuvre au niveau opératif 34 du serveur 32 qui effectue, également, un tri des commandes propres à chaque bureau commun ou partage.

De fait, les différentes commandes reçues par le serveur 32 sont compilées au niveau d'une pile 60 (figure 4) de commandes à partir de laquelle une opération de sélection 62 sépare les opérations 64 propres à tous les bureaux, par exemple le déclenchement du gestionnaire de programmes avec l'appui simultanée des touches du clavier « CTRL » « ALT » et « DEL », des opérations 63 propres à un bureau virtuel.

Dans ce dernier cas, des moyens applicatifs 36 (figure 3) transmettent chaque instruction au bureau concerné 37 ou 38 (figure 3 et 4) ou 67 et 68 (figure 4).

Une fois que les instructions sont traitées, le client RFB peut se déconnecter du serveur RFB avec la commande « VirtualDesktopDisconnect » ou pour changer de bureau virtuel côté client - commande « VirtualDesktopSwitch ».

Il convient de noter que, pour transmettre des commandes, un utilisateur peut mettre en oeuvre tout type d'outil de saisie tel qu'un clavier, une souris, ou tout autre périphérique d'entrée, accompagné de l'identifiant du client, ainsi que d'un indicateur disant si l'événement est exclusif ou non exclusif à un bureau dénommé « VirtualDesktoplnputEvent ».

Dans cette réalisation, cet identifiant permet de générer, au niveau du serveur RFB, un tableau de correspondance entre un focus i, à savoir une zone de saisie qui peut correspondre un clavier, à une souris, à un écran tactile ou, d'une façon plus générale, à toute entrée de commande d'un terminal client, et un bureau virtuel.

Ainsi un client RFB, qui transmet toutes ses requêtes au moyen d'un focus, est automatiquement associé à un bureau virtuel - après ouverture de la session comme indiqué ci-dessus.

La présente invention est susceptible de nombreuses variantes. Par exemple, un terminal RFB peut présenter plusieurs outils de saisies - claviers ou souris par exemple - associés à un ou plusieurs moniteurs qui peuvent être locaux - directement relié au serveur - ou distant - indirectement relié au serveur via un réseau du type Internet.

En outre, le serveur RFB peut également être un terminal RFB de telle sorte qu'il partage, en commun ou en virtuel, ses ressources avec d'autres terminaux.

Finalement, un terminal client peut avoir accès à plusieurs bureaux simultanément, par exemple un bureau commun - partagé - et un bureau virtuel - non partagé ou partagé avec un nombre limité d'autres terminaux clients.

## Revendications

1. Procédé de partage à distance d'un bureau informatique (37, 38) généré par une application (34, 36) exécutée dans un serveur (28, 32) en réponse à des commandes émises par des terminaux (40, 50) clients accédant à ce serveur via un réseau de télécommunication, les commandes d'un terminal client (40, 50) étant saisies au moyen d'une zone de saisie dénommée focus, procédé dans lequel les terminaux clients (40, 50) transmettent au serveur (28, 32) des commandes, dédiées au partage de bureau (37, 38), saisies au moyen de différents focus, chaque terminal client ayant un focus propre, conformément à un protocole de transmission d'interfaces graphiques du type RUI, pour « Remote User Interface » en anglais, basé sur un protocole RFB pour « Remote Frame Buffer » en anglais, de telle sorte, que le serveur (28, 32) effectue une correspondance, au moyen desdits focus, entre les commandes reçues et les bureaux partagés afin de transmettre en réponse aux commandes des terminaux (40, 50) une interface graphique (22) représentative de ce bureau (37, 38) du serveur (28, 32) au moyen d'indications de l'état des pixels dans cette interface graphique conformément à ce protocole du type RUI.

2. Procédé selon la revendication 1 dans lequel le serveur (32) transmet à des terminaux clients effectuant un partage commun d'un même bureau une même interface graphique (22).

3. Procédé selon la revendication 2 dans lequel les commandes transmises par chacun des terminaux clients effectuant un partage commun d'une même interface graphique (22) sont exécutées, par leur serveur (32), dans leur ordre de réception, l'interface graphique (22) générée par le serveur (28) pour ce bureau commun suite à l'exécution d'une commande étant transmise à l'ensemble des terminaux clients effectuant le partage commun.

4. Procédé selon l'une des revendications précédentes dans lequel le serveur (32) transmet à des terminaux clients (40, 50) effectuant un partage virtuel de bureaux distincts (37, 38) des interfaces graphiques distinctes.

5. Procédé selon la revendication 4 dans lequel les commandes transmises par un des terminaux clients (40, 50) effectuant un partage virtuel de différentes interfaces graphiques sont exécutées, par leur serveur (32), uniquement vis-à-vis de l'interface graphique du bureau associé à ce terminal.

6. Procédé selon l'une des revendications précédentes prenant en compte au moins une des commandes RFB suivantes :
- « GetVirtualDesktopList » : pour envoyer un message d'un terminal client vers le serveur afin de demander les éventuels bureaux disponibles sur le serveur,
- « Virtual DesktopList » : pour que le serveur réponde à la requête du terminal client en transmettant la liste des bureaux disponibles,
- « Virtual DesktopAuthentication » pour qu'un terminal client puisse choisir de se connecter sur un bureau virtuel déjà existant via la fonction, - « NotifyClientConnection » pour informer un terminal client de la demande de connexion de l'autre terminal client,
- « Virtual DesktopAuthenticationAllowance » : pour accepter ou refuser le partage d'un bureau en mode commun, cette acceptation ou ce refus étant notifié par l'envoi d'un message du serveur vers un terminal client requérant ce partage.

7. Procédé selon l'une des revendications précédentes dans lequel le serveur (32) associe d'une part un identifiant d'un terminal (40, 50) client avec un ensemble d'identifiants de focus correspondant chacun à au moins un périphérique de saisie côté client, et associe d'autre part un identifiant de terminal avec un bureau virtuel.

8. Serveur (28, 32) destiné à effectuer un partage à distance d'un bureau informatique (37, 38) généré par une ou plusieurs applications (34, 36) exécutées localement en réponse à des commandes émises par des terminaux clients (40, 50) accédant à ce serveur via un réseau de télécommunication, comprenant :
- des moyens (33) pour recevoir, des terminaux clients, des commandes dédiées au partage de bureau et conformes à un protocole de transmission d'interfaces graphiques du type RUI, basé sur un protocole RFB,
- des moyens pour gérer une pluralité de focus, ou zones de saisies de commandes des terminaux clients, pouvant accéder à une même ressource présentée par une application, chaque terminal client ayant un focus propre, et
- des moyens pour transmettre en réponse aux terminaux une interface graphique (22) représentative du bureau (37, 38) au moyen d'indications de l'état des pixels dans cette interface graphique conformément au protocole du type RUI basé sur le protocole RFB.

9. Serveur (28, 32) selon la revendication précédente, configuré pour être relié à au moins un terminal (40, 50), ledit au moins un terminal comprenant :
- des moyens pour transmettre au serveur des commandes, dédiées au partage de bureau, associées à un focus propre au terminal client et conformes à un protocole de transmission d'interfaces graphiques du type RUI, basé sur un protocole RFB, et
- des moyens pour recevoir du serveur une interface graphique représentative du bureau au moyen d'indications de l'état des pixels dans cette interface graphique conformément au protocole du type RUI basé sur le protocole RFB.

## Patentansprüche

1. Verfahren zur entfernten gemeinsamen Nutzung eines Computerbüros (37, 38), erzeugt durch eine Applikation (34, 36), die in einem Server (28, 32) als Antwort auf Befehle, die von Client-Endgeräten (40, 50) gesendet werden, die über ein Telekommunikationsnetz auf diesen Server zugreifen, ausgeführt wird, wobei die Befehle eines Client-Endgeräts (40, 50) mittels eines als Fokus bezeichneten Eingabebereichs eingegeben werden, wobei bei dem Verfahren die Client-Endgeräte (40, 50) dem Server (28, 32) Befehle übermitteln, die der gemeinsamen Büronutzung (37, 38) gewidmet sind, die mittels unterschiedlicher Fokusse eingegeben werden, wobei jedes Client-Endgerät einen eigenen Fokus hat, gemäß einem Übertragungsprotokoll grafischer Schnittstellen vom Typ RUI für "Remote User Interface" auf Englisch, basierend auf einem RFB-Protokoll für "Remote Frame Buffer" auf Englisch, derart, dass der Server (28, 32) mittels der Fokusse zwischen den empfangenen Befehlen und den gemeinsam genutzten Büros einen Abgleich durchführt, um als Antwort auf die Befehle der Endgeräte (40, 50) eine grafische Schnittstelle (22), die für dieses Büro (37, 38) des Server (28, 32) repräsentativ ist, mittels Angaben des Zustands der Pixel in dieser grafischen Schnittstelle gemäß diesem Protokoll vom Typ RUI zu übermitteln.

2. Verfahren nach Anspruch 1, wobei der Server (32) Client-Endgeräten, die eine gemeinsame Nutzung desselben Büros durchführen, dieselbe grafische Schnittstelle (22) übermittelt.

3. Verfahren nach Anspruch 2, wobei die von jedem der Client-Endgeräte, die eine gemeinsame Nutzung derselben grafischen Schnittstelle (22) durchführen, übermittelten Befehle von ihrem Server (32) in ihrer Empfangsreihenfolge ausgeführt werden, wobei die von dem Server (28) für dieses gemeinsame Büro infolge der Ausführung eines Befehls erzeugte grafischen Schnittstelle (22) allen Client-Endgeräten übermitteln wird, welche die gemeinsame Nutzung durchführen.

4. Verfahren nach einem der vorangehenden Ansprüche, wobei der Server (32) Client-Endgeräten (40, 50), die eine virtuelle gemeinsame Nutzung unterschiedlicher Büros (37, 38) durchführen, unterschiedliche grafische Schnittstellen übermittelt.

5. Verfahren nach Anspruch 4, wobei die Befehle, die von einem der Client-Endgeräte (40, 50) übermittelt werden, die eine virtuelle gemeinsame Nutzung verschiedener grafischer Schnittstellen durchführen, von ihrem Server (32) nur gegenüber der grafischen Schnittstelle des Büros ausgeführt werden, welches diesem Endgerät zugeordnet ist.

6. Verfahren nach einem der vorangehenden Ansprüche, das mindestens einen der folgenden RFB-Befehle berücksichtigt:
- "GetVirtualDesktopList": zum Versenden einer Nachricht von einem Client-Endgerät an den Server, um eventuell auf dem Server verfügbare Büros abzufragen,
- "Virtual DesktopList": damit der Server die Anfrage des Client-Endgeräts durch Übermitteln der Liste der verfügbaren Büros beantwortete,
- "Virtual DesktopAuthentication": damit ein Client-Endgerät wählen kann, sich mit einem bereits vorhandenen virtuellen Büro über die Funktion zu verbinden,
- "NotifyClientConnection": um ein Client-Endgerät über die Verbindungsanfrage des anderen Client-Endgeräts zu informieren,
- "Virtual DesktopAuthenticationAllowance": um die gemeinsame Nutzung eines Büros im gemeinsamen Modus zu genehmigen, wobei diese Genehmigung oder diese Ablehnung durch Versand einer Nachricht des Servers an ein Client-Endgerät zugestellt wird, das diese gemeinsame Nutzung beantragt.

7. Verfahren nach einem der vorangehenden Ansprüche, wobei der Server (32) zum einen ein Kennwort eines Client-Endgeräts (40, 50) einer Gruppe von Fokuskennwörtern zuordnet, die jeweils mindestens einem clientseitigen Eingabe-Peripheriegerät entsprechen, und zum anderen ein Endgeräte-Kennwort einem virtuellen Büro zuordnet.

8. Server (28, 32), der bestimmt ist, eine entfernte gemeinsame Nutzung eines Computerbüros (37, 38) durchzuführen, das von einer oder mehreren Applikationen (34, 36) erzeugt wird, die lokal als Antwort auf Befehle ausgeführt werden, die von Client-Endgeräten (40, 50) gesendet werden, die über ein Telekommunikationsnetz auf diesen Server zugreifen, umfassend:
- Mittel (33), um von den Client-Endgeräten Befehle zu empfangen, die der gemeinsamen Büronutzung gewidmet sind und einem Übertragungsprotokoll grafischer Schnittstellen vom Typ RUI, basierend auf einem RFB-Protokoll, entsprechen,
- Mittel, um eine Vielzahl von Fokussen oder Eingabezonen von Befehlen der Client-Endgeräte zu erzeugen, die auf dieselbe Ressource zugreifen können, die von einer Applikation präsentiert wird, wobei jedes Client-Endgerät einen eigenen Fokus hat, und
- Mittel, um den Endgeräten als Antwort eine grafische Schnittstelle (22), die für das Büro (37, 38) repräsentativ ist, mittels Angaben des Zustands der Pixel in dieser grafischen Schnittstelle gemäß dem Protokoll vom Typ RUI, basierend auf dem RFB-Protokoll, zu übermitteln.

9. Server (28, 32) nach vorangehendem Anspruch, der konfiguriert ist, um mit mindestens einem Endgerät (40, 50) verbunden zu sein, wobei das mindestens eine Endgerät umfasst:
- Mittel, um dem Server Befehle zu übermitteln, die der gemeinsamen Büronutzung gewidmet sind, die einem Fokus zugeordnet sind, der dem Endgerät zueigen ist, und einem Übertragungsprotokoll grafischer Schnittstellen vom Typ RUI, basierend auf einem RFB-Protokoll, entsprechen, und
- Mittel, um vom Server eine grafische Schnittstelle, die für das Büro repräsentativ ist, mittels Angaben des Zustands der Pixel in dieser grafischen Schnittstelle gemäß dem Protokoll vom Typ RUI, basierend auf dem RFB-Protokoll, zu empfangen.

## Claims

1. Method for the remote sharing of a computer office (37, 38) generated by an application (34, 36) executed in a server (28, 32) in response to commands issued by client terminals (40, 50) accessing this server via a telecommunication network, the commands of a client terminal (40, 50) being entered by means of an entry area termed the focus, method wherein the client terminals (40, 50) transmit to the server (28, 32) commands dedicated to office sharing (37, 38), entered by means of various focuses, each client terminal having its own focus, in accordance with a graphics interface transmission protocol of the RUI type, standing for "Remote User Interface", based on a RFB protocol for "Remote Frame Buffer", in such a way that the server (28, 32) matches up, by means of said focuses, the commands received and the offices shared so as to transmit, in response to the commands from the terminals (40, 50), a graphics interface (22) representative of this office (37, 38) of the server (28, 32) by means of indications of the state of the pixels in this graphics interface in accordance with this protocol of the RUI type.

2. Method according to claim 1 wherein the server (32) transmits to client terminals that are sharing the same office the same graphics interface (22).

3. Method according to claim 2 wherein the commands transmitted by each one of the client terminals that are sharing the same graphics interface (22) are executed, by their server (32), in their order of reception, the graphics interface (22) generated by the server (28) for this shared office following the execution of a command being transmitted to all of the client terminals involved in the sharing.

4. Method according to one of the preceding claims wherein the server (32) transmits to client terminals (40, 50) that are virtually sharing separate offices (37, 38) separate graphics interfaces.

5. Method according to claim 4 wherein the commands transmitted by one of the client terminals (40, 50) that is virtually sharing different graphics interfaces are executed, by their server (32), only with regards to the graphics interface of the office associated with this terminal.

6. Method according to one of the preceding claims taking account of at least one of the following RFB commands:
- "GetVirtualDesktopList": for sending a message from a client terminal to the server in order to request any offices available on the server,
- "Virtual DesktopList": so that the server responds to the request of the client terminal by transmitting the list of available offices,
- "Virtual DesktopAuthentication" so that a client terminal can choose to connect to a virtual office that already exists via the function "NotifyClientConnection" in order to inform a client terminal of the connection request from the other client terminal,
- "Virtual DesktopAuthenticationAllowance": to accept or refuse the sharing of an office in shared mode, with this acceptance or this refusal being notified by the sending of a message from the server to the client terminal requesting this sharing.

7. Method according to one of the preceding claims wherein the server (32) associates on the one hand an identifier of a client terminal (40, 50) with a set of identifiers of focus each corresponding to at least one entry peripheral device on the client side, and associates on the other hand a terminal identifier with a virtual office.

8. Server (28, 32) intended to carry out a remote sharing of a computer office (37, 38) generated by one or several applications (34, 36) executed locally in response to commands issued by client terminals (40, 50) accessing this server via a telecommunication network, comprising:
- means (33) for receiving, from the client terminals, commands dedicated to office sharing and in accordance with a graphics interface transmission protocol of the RUI type, based on a RFB protocol,
- means for managing a plurality of focuses, or command entry areas of the client terminals, able to access the same resource presented by an application, with each terminal having its own focus, and
- means for transmitting in response to the terminals a graphics interface (22) that represents an office (37, 38) by means of indications of the state of the pixels in this graphics interface in accordance with the RUI type protocol based on the RFB protocol.

9. Server (28, 32) according to the preceding claim, configured to be connected to at least one terminal (40,50), said at least one terminal comprising:
- means for transmitting to the server commands, dedicated to the office sharing, associated with a focus that is proper to the client terminal and in accordance with a graphics interface transmission protocol of the RUI type, based on a RFB protocol, and
- means for receiving from the server a graphics interface representative of the office by means of indications of the state of the pixels in this graphics interface in accordance with the protocol of the RUI type based on the RFB protocol.
